Europäisches Patentamt

European Patent Office

Office européen des brevets

(11) Veröffentlichungsnummer: **0 149 166**
**B1**

(12) **EUROPÄISCHE PATENTSCHRIFT**

(45) Veröffentlichungstag der Patentschrift:
**20.04.88**

(51) Int. Cl.⁴: **H 04 N 5/21**

(21) Anmeldenummer: **84115568.2**

(22) Anmeldetag: **17.12.84**

(54) Schaltungsanordnung zur Elimination von im Videosignal enthaltenen NF-Störsignalen.

(30) Priorität: **27.12.83 DE 3347218**

(43) Veröffentlichungstag der Anmeldung:
**24.07.85 Patentblatt 85/30**

(45) Bekanntmachung des Hinweises auf die Patenterteilung:
**20.04.88 Patentblatt 88/16**

(84) Benannte Vertragsstaaten:
**DE FR**

(56) Entgegenhaltungen:
**DE - B - 2 138 738**
**DE - B - 2 821 183**
**US - A - 4 174 525**
**US - A - 4 360 834**

(73) Patentinhaber: **Siemens Aktiengesellschaft Berlin und München, Wittelsbacherplatz 2, D-8000 München 2 (DE)**

(72) Erfinder: **Sklebitz, Hartmut, Würzburger Ring 45, D-8520 Erlangen (DE)**
Erfinder: **Hahm, Gerhard, Dipl.-Ing., Schuhstrasse 49, D-8520 Erlangen (DE)**
Erfinder: **Horbaschek, Heinz, Dipl.-Ing., Dreibergstrasse 10a, D-8520 Erlangen (DE)**
Erfinder: **Maass, Wolfgang, Haunritzer Weg 2, D-8500 Nürnberg (DE)**

## Beschreibung

Die Erfindung betrifft eine Schaltungsanordnung zur Elimination von im Videosignal einer Fernsehkamera enthaltenen NF-Störsignalen gemäss dem Oberbegriff des Patentanspruches 1. Derartige niederfrequente Störsignale werden beispielsweise durch mechanische Erschütterung einer Fernseh-Aufnahmeröhre erzeugt, so dass deren in der Nähe des Targets angeordnete maschenförmige Elektrode, das Feldnetz, in Schwingungen gerät. Durch die resultierende periodische Kapazitätsänderung erhält man einen Verschiebungsstrom zwischen dem Feldnetz und dem Target mit der Resonanzfrequenz des Feldnetzes. Dieser Störeinfluss wird Mikrophonie genannt. Auch können NF-Störspannungen durch die Versorgungsnetzspannung entstehen.

In dem in der Funkschau, Heft 4, 1982, Seiten 70 bis 72 erschienenen Artikel «NF-Störspannung wirksam unterdrückt» ist eine Schaltungsanordnung beschrieben, bei der die Störsignale durch eine Klemmschaltung unterdrückt werden, die beispielsweise zur Zeit der hinteren Schwarzschulter das Videosignal auf ein festes Bezugspotential schaltet. Da in diesem Fall Störungen des Versorgungsnetzes beseitigt werden sollen, liegt die Frequenz der Störspannung deutlich unterhalb der Zeilenfrequenz einer normalen Fernsehanlage. Wie aus dem Bild 8 des obengenannten Artikels ersichtlich, sind derartige Klemmschaltungen in ihrer Wirkungsweise sehr frequenzabhängig. Je mehr die Frequenz des Störsignales sich der Frequenz des Nutzsignales nähert, desto geringer ist bei derartigen Klemmschaltungen die Unterdrückung des Störsignales. Da aber die Resonanzfrequenz des Feldnetzes bei ca. 2 kHz liegt, kann durch eine Klemmschaltung der Einfluss der Mikrophonie wenn überhaupt nur sehr ungenügend abgeschwächt werden.

Zur Beseitigung der Störungen durch Schwingungen des Feldnetzes wurden deshalb für die Herstellung Materialien gewählt, die sich nicht so leicht zum Schwingen anregen lassen. Dies ergibt zwar eine Verringerung der Störamplitude. Leider kann aber auch die Schwingungsfrequenz weiter erhöht werden, so dass Klemmschaltungen zur Störunterdrückung nicht mehr eingesetzt werden können.

In der Röntgen-Fernsehtechnik finden für hochwertige Aufnahmen oft hochauflösende Fernsehsysteme Verwendung. Die Erhöhung der Auflösung einer Fernseh-Aufnahmeröhre kann dadurch erreicht werden, dass deren Feldnetzspannung gegenüber einem konventionellen Fernsehsystem erhöht wird. Dadurch wird aber auch gleichzeitig der Störeinfluss der Mikrophonie linear anwachsen, so dass sich auf diese Weise die vorher aufgezeigten Probleme nicht lösen lassen. Weiterhin wird die Langsamabtastung (slow-scan) zur Erhöhung der Auflösung eingesetzt. Da hierbei aber die Resonanzfrequenz des Feldnetzes noch näher an die nunmehr reduzierte Zeilenfrequenz heranrückt, lassen sich aus den vorher erläuterten Gründen die Störamplituden nicht mehr eliminieren.

In der US-PS 4 360 834 ist eine Fernsehkamera mit einem Schaltkreis zur Beseitigung der Mikrophonie beschrieben, der eine Sample/Hold-Schaltung, ein Tiefpassfilter mit Phasenumkehrstufe, eine Additionsstufe, eine Erfassungsschaltung für das Störsignal und eine Detektorschaltung aufweist. Tritt nun in der Austastlücke des Videosignales ein NF-Signal auf, bewirkt der Detektor, eine PLL-Schaltung, die Zuschaltung des Tiefpassfilters, so dass durch die Phasenumkehrung und anschliessender Addition das NF-Signal eliminiert wird. Ebenfalls in der Austastlücke des Videosignales wird ein Wert festgehalten, der zur Erfassung der Phasenlage durch die Erfassungsschaltung dient, die entsprechend die Phase in der Phasenumkehrstufe steuert. Da, wie bereits erwähnt, bei Langsamabtastung die Resonanzfrequenz des Feldnetzes näher an die reduzierte Zeilenfrequenz heranrückt, und auch die Frequenz des Videosignales reduziert wird, werden durch diese Schaltung mit Tiefpassfilter auch Teile des Videosignales unterdrückt.

Die Erfindung geht von der Aufgabe aus, eine Schaltung der eingangs genannten Art zu schaffen, die eine möglichst vollständige Unterdrückung der NF-Störsignale, insbesondere hervorgerufen durch die Mikrophonie, ohne störende Beeinflussung des Nutzsignales bewirkt.

Die Aufgabe wird erfindungsgemäss durch die im kennzeichnenden Teil des Patentanspruches 1 angegebenen Merkmale gelöst. Dadurch wird erreicht, dass bei Vorhandensein eines Störsignales das Frequenzfilter eingeschaltet und derart beeinflusst wird, dass das Störsignal unterdrückt wird. Ist dagegen kein Störsignal vorhanden, wird das Nutzsignal, da das Frequenzfilter abgeschaltet ist, nicht beeinflusst.

Eine optimale Unterdrückung des Störsignales erhält man, wenn die Erfassungsschaltung eine Regelschaltung ist, die das Störsignal am Ausgang der Schaltungsanordnung mit einem Sollwert vergleicht und auf das Filter im Sinne der Ausregelung von Regelabweichungen einwirkt. Ein einfacher Aufbau ergibt sich, wenn das Frequenzfilter aus einer in ihrer Frequenz durch die Regelschaltung einstellbaren Bandsperre besteht. Eine vorteilhafte Weiterbildung erhält man, wenn das Frequenzfilter einen Bandpass aufweist, dessen Ausgangssignal in einer Mischstufe dem Videosignal negativ überlagert wird. Eine Anpassung des Bandpasses an das Störsignal wird erreicht, wenn das Frequenzfilter weiterhin eine an den Bandpass angeschlossene erste Multiplikationsstufe und einen mit dieser verbundenen Phasenschieber aufweist, die die Stellglieder für die Regelschaltung bilden.

Eine einfache Regelschaltung erhält man, wenn sie einen Bandpass für das Störsignal aufweist, wenn am Ausgang des Bandpasses ein Spitzenwertdetektor angeschlossen ist, dessen Ausgangssignal einer zweiten Multiplikationsstufe und einem Detektor für die Regelrichtung zugeführt ist, dessen Ausgang mit dem zweiten Eingang der Multiplikationsstufe verbunden ist, wenn das Ausgangssignal der Multiplikationsstufe als Istwert in einem Regler mit dem Sollwert verglichen wird, und wenn der Ausgang des Reglers mit dem Frequenzfilter verbunden ist. Eine Unterdrückung von kurzzeitigen, störenden Filterungen wird unterbunden, wenn das Frequenzfilter mit einem Schalter einschaltbar ist, der von einem Zeitglied gesteuert wird, dem das durch einen Bandpass gefilterte Videosignal zugeführt wird. Bei Verwendung der Schaltungsanordnung in einer Röntgendiagnostikanlage lässt sich die Regelschaltung vorteilhaft steuern, wenn eine Steuerschaltung vorhanden ist, die den Schaltzustand der Röntgenröhre erfasst und den Regelkreis nur bei ausgeschalteter Röntgenstrahlung aktiviert. Ein derartiger Regelvorgang lässt sich vorteilhaft erreichen, wenn der Regler über einen Umschalter mit Speichermitteln verbunden ist, wenn eine Vorrichtung zur Erschütterung des Vidikons vorgesehen ist und wenn die Steuerschaltung den Umschalter und die Vorrichtung derart steuert, dass nur bei ausgeschalteter Durchleuchtung eine Erschütterung des Vidikons ausgelöst wird und gleichzeitig die entsprechende Ansteuerung des Frequenzfilters durch Änderung der Informationsinhalte der Speichermittel erfolgt.

Die Erfindung ist nachfolgend anhand von in der Zeichnung dargestellten Ausführungsbeispielen näher erläutert. Es zeigen:

Fig. 1 ein Blockschaltbild einer erfindungsgemässen Schaltungsanordnung,

Fig. 2 ein Blockschaltbild einer anderen Ausführungsform der erfindungsgemässen Schaltungsanordnung, und

Fig. 3 ein Blockschaltbild einer abgewandelten Ausführungsform der in Figur 2 dargestellten Schaltungsanordnung.

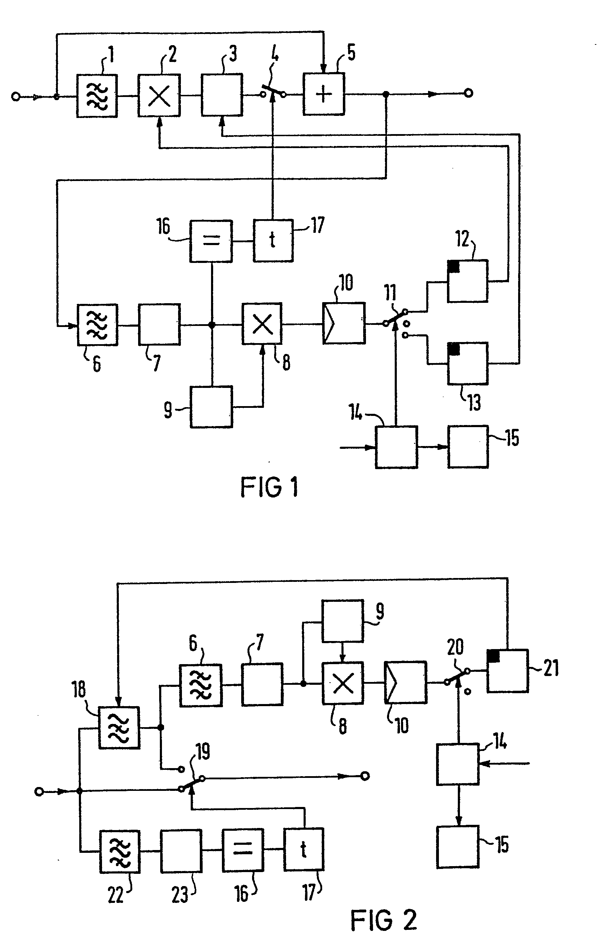

In der Figur 1 ist eine Schaltungsanordnung zur Unterdrückung von in dem Videosignal enthaltenen NF-Störsignalen dargestellt, der das Videosignal einer Fernsehkamera zugeführt wird. Der Eingang der Schaltungsanordnung ist mit einem Bandpass 1 verbunden, an dem eine erste Multiplikationsstufe 2 angeschlossen ist. Mit dem Ausgang der ersten Multiplikationsstufe 2 ist ein Phasenschieber 3 verbunden, der über einen Schalter 4 an einer Mischstufe 5 angeschlossen ist. Dem zweiten Eingang der Mischstufe 5 wird ebenfalls das Eingangs-Videosignal zugeführt. An der Mischstufe 5 ist ein zweiter Bandpass 6 angeschlossen, der mit einem Spitzenwertdetektor 7 verbunden ist, dessen Ausgangssignal einer zweiten Multiplikationsstufe 8, einem Detektor 9 für die Regelrichtung und einem Komparator 16 zugeführt ist, deren Ausgang mit einem Zeitglied 17 verbunden ist, das den Schalter 4 steuert. Der Ausgang des Detektors 9 ist mit dem zweiten Eingang der zweiten Multiplikationsstufe 8 verbunden, deren Ausgang an einem Regler 10 angeschlossen ist. An dem Ausgang des Reglers 10 sind über einem Dreifach-Umschalter 11 zwei Speicher 12 und 13 angeschlossen, die mit der ersten Multiplikationsstufe 2 und dem Phasenschieber 3 verbunden sind. Der Umschalter 11 wird von einer Steuerschaltung 14 betätigt, der ein Statussignal der Röntgenanlage zugeführt wird, das die ausgeschaltete Durchleuchtung signalisiert. Die Steuerschaltung 14 ist weiterhin mit einer Vorrichtung 15 zur Erschütterung des Vidikons verbunden.

Durch den Aufbau des Frequenzfilters mit Bandpass 1, erster Multiplikationsstufe 2, Phasenschieber 3 und Mischstufe 5 wird das Störsignal herausgesiebt und gegenphasig zum Videosignal addiert. Bei richtiger Mischung des Videosignales mit dem gefilterten Störsignal, d.h. gleiche Amplitude und 180°-Phasenverschiebung der Störsignalanteile, wird das Störsignal vollständig ausgelöscht. Hierbei ergibt sich aber das Problem, dass die Resonanzfrequenz des Feldnetzes, mit dem dieses schwingt, temperaturabhängig ist. Pro 1 K Temperaturdifferenz kann sich die Frequenz um ca. 1% ändern. Deswegen wählt man bei dieser Ausführungsform einen relativ breitbandigen Bandpass, so dass das Störsignal in seinem gesamten möglichen Frequenzbereich herausgesiebt werden kann. Da weder der Amplitudengang noch der Frequenzgang des Bandpasses 1 im Durchlassbereich hinreichend linear sind, wird durch die nachgeschaltete erste Multiplikationsstufe 2 und den Phasenschieber 3 das herausgefilterte Störsignal an das im Videosignal enthaltene Störsignal angepasst. Durch die nachgeschaltete Regelschaltung 6 bis 15 wird das Frequenzfilter auf sein Optimum geregelt. Die Stellgrössen dieser Regelvorgänge bleiben wegen der sehr langsam stattfindenden Temperaturveränderung über längere Zeit konstant.

Deswegen ist es bei Röntgenfernsehanlagen zweckmässig, wenn in den Durchleuchtungspausen durch die Steuerschaltung 14 eine Erschütterung des Vidikons ausgelöst wird, so dass das am Eingang der Schaltungsanordnung liegende Videosignal nur dieses von der Erschütterung herrührende Störsignal aufweist. Es lässt sich aber auch eine manuelle Erschütterung erreichen, indem die Beobachtungsperson auf ein Zeichen oder Signal der Steuerschaltung 14 hin beispielsweise die Röntgenanlage mit der Fernsehkamera bewegt. Die Steuerschaltung 14 bewirkt die Zuschaltung des Frequenzfilters 1 bis 3 und steuert den Umschalter 11 derart, dass er von seiner Mittelstellung aus alternierend die beiden Speicher 12 und 13 an den Regler 10 schaltet. Dadurch werden nacheinander die Amplitude und die Phase des Ausgangssignales des Bandpasses 1 auf ihr Optimum geregelt, so dass am Ausgang der Mischstufe 5 kein oder nur ein geringes Störsignal vorhanden ist. Das bedeutet, dass das Ausgangssignal der zweiten Multiplikationsstufe 8 als Istwert dem Regler 10 zugeführt ist, der ihn mit einem Sollwert von Null vergleicht, und die in den Speichern 12 und 13 enthaltenen Regelgrössen so lange verändert, bis der Istwert ebenfalls Null und somit das Störsignal eliminiert ist.

Wird nun nach erfolgter Justierung der Regelschaltung die Durchleuchtung eingeschaltet und tritt dabei eine Erschütterung der Fernsehkamera auf, so wird durch den Bandpass 6 und den Spitzenwertdetektor 7 das Auftreten des Störsignales erkannt und dem Komparator 16 zugeführt. Überschreitet die Amplitude des Störsignales einen vorgegebenen Schwellenwert, erzeugt der Komparator 16 ein Signal, so dass durch das Zeitglied 17 der Schalter 5 verzögert betätigt wird und eine Elimination des Störsignales erfolgt. Nach einer programmierbaren Zeitspanne, die beispielsweise 3s bis 10s betragen kann, wird der Schalter 4 wieder betätigt und der Bandpass 1 wieder abgeschaltet. Auf diese Weise werden die meist sehr kurzzeitigen Abschnitte, in denen das Videosignal Anteile des Störsignales enthält, unkompensiert gelassen, während bei stärkerem und länger andauerndem Störsignal dieses eliminiert wird.

In der Figur 2 ist eine weitere Ausführungsform der Schaltungsanordnung dargestellt, bei der eine Elimination des Störsignales durch eine Bandsperre 18 erfolgt, die relativ schmalbandig ausgeführt und in ihrem Frequenzgang steuerbar ist. Dadurch wird eine Anpassung an das Temperaturverhalten des Feldnetzes der Fernsehaufnahmeröhre erreicht. Als eine derartige Bandsperre kann ein in der Zeitschrift «Electronics», Heft Nov. 1982, Seite 172 beschriebener monolithischer Filter Verwendung finden.

Die mit dem Eingang der Schaltungsanordnung verbundene Bandsperre 18 ist mit ihrem Ausgang an den einen Umschaltkontakt eines Umschalters 19 angeschlossen, dessen zweitem Kontakt das aktuelle Videosignal zugeführt wird. Der Umschalter 19 ist mit dem Ausgang der Schaltungsanordnung verbunden. An den Ausgang der Bandsperre 18 ist die Regelschaltung, bestehend aus Bandpass 6, Spitzenwertdetektor 7, Multiplizierer 8, Detektor 9 und Regler 10, angeschlossen, der über einen Schalter 20 mit einem Speicher 21 verbunden ist, dessen Ausgangssignal der Bandsperre 18 als Regelgrösse zugeführt wird. Der Schalter 20 wird ebenfalls durch die Steuerschaltung 14 gesteuert, die mit der Röntgenanlage und der Vorrichtung 15 zur Erschütterung des Vidikons verbunden ist.

Das Eingangs-Videosignal wird weiterhin einem zweiten Bandpass 22 zugeführt, der mit einem zweiten Spitzenwertdetektor 23 verbunden ist, an dem der Komparator 16 und das Zeitglied 17 angeschlossen sind, das den Umschalter 19 steuert.

Die Funktionsweise dieser Schaltung ist im wesentlichen die gleiche wie die der anhand der Figur 1 beschriebenen Schaltung, nur dass anstelle des Bandpasses 1, dessen Signal mit dem aktuellen Videosignal negativ überlagert wird, eine Bandsperre 18 getreten ist, die in den Signalweg des Videosignales geschaltet wird und eine Herausfilterung des Störsignales bewirkt.

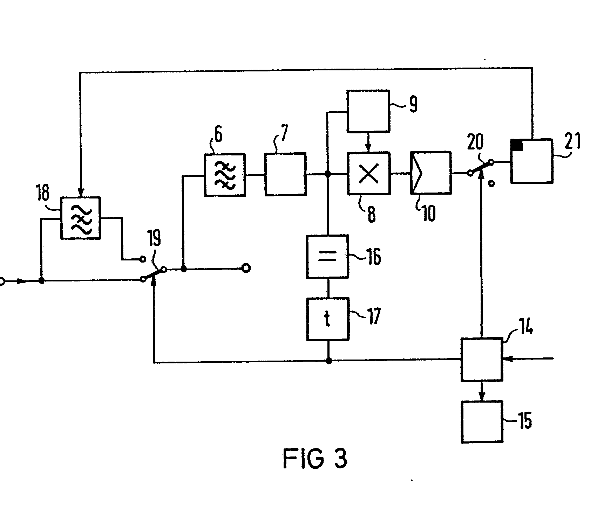

In der Figur 3 ist eine gegenüber der Figur 2 abgewandelte Schaltungsanordnung dargestellt, bei der der Komparator 16 an dem Ausgang des Spitzenwert-Detektors 7 angeschlossen ist. Der Umschalter 19 wird von dem an dem Komparator 16 angeschlossenen Zeitglied 17 und der Steuerschaltung 14 betätigt. Der Bandpass 6 ist nunmehr nicht an der Bandsperre 18, sondern an dem Umschaltkontakt des Umschalters 19 angeschlossen, der mit dem Ausgang der Schaltung verbunden ist. Die weitere Beschaltung ist die gleiche wie in Figur 2.

Zur Einstellung der Regelgrössen wird die Bandsperre 18 über den von der Steuerschaltung 14 betätigten Umschalter 19 mit dem Regelkreis 6 bis 21 verbunden, der die Einstellung der Frequenz der Bandsperre 18 vornimmt. Ist diese Justierung erfolgt, so schaltet die Steuerschaltung 14 den Umschalter 19 wieder in seine dargestellte Position, so dass das aktuelle Videosignal über dem Bandpass 6 und dem Spitzenwertdetektor 7 dem Komparator 16 zugeführt wird, der das Videosignal auf Störsignale überprüft. Tritt ein Störsignal auf, so wird durch das Zeitglied 17 der Umschalter 19 in bereits beschriebener Weise betätigt, so dass das Videosignal über die Bandsperre 18 geleitet und das Störsignal eliminiert wird. Durch diese vereinfachte Schaltungsanordnung werden der Bandpass 22 und der Spitzenwertdetektor 23 eingespart.

Eine sehr einfache und kostensparende Lösung erhält man, wenn die Bandsperre 18 nicht sehr schmalbandig ausgeführt ist. Ihre Sperrfrequenz ist dabei auf die Resonanzfrequenz des Feldnetzes der Fernsehkamera bei Betriebstemperatur eingestellt. Dadurch kann die gesamte Regelschaltung 6 bis 10, 14, 15, 20, 21 entfallen. Die Bandsperre braucht nunmehr nicht in ihrer Frequenz regelbar sein. Eine bessere, aber ebenfalls kostengünstige Lösung wird durch den Einsatz eines Temperatursensors in der Nähe des Feldnetzes erreicht, der das Sperrverhalten der Bandsperre 18, d.h. deren Resonanzfrequenz, so steuert, dass es dem Temperaturverhalten des Feldnetzes und damit deren veränderlichen Resonanzfrequenz optimal angepasst ist. Auch in diesem Fall werden nur noch der Bandpass 22, der Spitzenwertdetektor 23, der Komparator 16 und das Zeitglied 17, das den Schalter 19 steuert, benötigt. Die aufwendigere, aber genauere Regelschaltung kann auch hierbei entfallen.

## Patentansprüche

1. Schaltungsanordnung zur Elimination von im Videosignal einer Fernsehkamera enthaltenen NF-Störsignalen, mit einem zuschaltbaren Frequenzfilter (1 bis 3, 18), einer Detektorschaltung (6, 7, 16, 17, 22, 23) für das Störsignal, die die Zuschaltung des Filters (1 bis 3, 18) bewirkt, und mit einer Erfassungsschaltung (6 bis 15, 20, 21) für das Störsignal, dadurch gekennzeichnet, dass das Frequenzfilter ein Bandfilter ist, dass die Erfassungsschaltung auf das Filter im Sinne der Unterdrückung des Störsignales einwirkt, und dass die Detektorschaltung einen Komparator (16) und ein Zeitglied (17) aufweist, die eine Zuschaltung des Bandfilters (1 bis 3) für eine programmierbare Zeitspanne nur dann bewirkt, wenn das Störsignal eine vorbestimmte Grösse überschreitet.

2. Schaltungsanordnung nach Anspruch 1, dadurch gekennzeichnet, dass die Erfassungsschaltung eine Regelschaltung (6 bis 15, 20, 21) ist, die das Störsignal am Ausgang der Schaltungsanordnung mit einem Sollwert vergleicht und auf das Filter im Sinne der Ausregelung von Regelabweichungen einwirkt.

3. Schaltungsanordnung nach Anspruch 1 oder 2, dadurch gekennzeichnet, dass das Frequenzfilter aus einer in ihrer Frequenz durch die Regelschaltung (6 bis 15, 20, 21) einstellbaren Bandsperre (18) besteht.

4. Schaltungsanordnung nach Anspruch 1 oder 2, dadurch gekennzeichnet, dass das Frequenzfilter einen Bandpass (1) aufweist, dessen Ausgangssignal in einer Mischstufe (5) dem Videosignal negativ überlagert wird.

5. Schaltungsanordnung nach Anspruch 4, dadurch gekennzeichnet, dass das Frequenzfilter weiterhin eine an dem Bandpass (1) angeschlossene erste Multiplikationsstufe (2) und einen mit diesem verbundenen Phasenschieber (3) aufweist, die die Stellglieder für die Regelschaltung (6 bis 15) bilden.

6. Schaltungsanordnung nach einem der Ansprüche 1 bis 5, dadurch gekennzeichnet, dass die Regelschaltung einen Bandpass (6) für das Störsignal aufweist, dass am Ausgang des Bandpasses (6) ein Spitzenwertdetektor (7) angeschlossen ist, dessen Ausgangssignal einer zweiten Multiplikationsstufe (8) und einem Detektor (9) für die Regelrichtung zugeführt ist, dessen Ausgang mit dem zweiten Eingang der zweiten Multiplikationsstufe (8) verbunden ist, dass das Ausgangssignal der zweiten Multiplikationsstufe (8) als Istwert in einem Regler (10) mit dem Sollwert verglichen wird, und dass der Ausgang des Reglers (10) mit dem Frequenzfilter (1 bis 3, 18) verbunden ist.

7. Schaltungsanordnung nach einem der Ansprüche 1 bis 6, dadurch gekennzeichnet, dass das Frequenzfilter (1 bis 3, 18) mit einem Schalter (4, 19) einschaltbar ist, der von einem Zeitglied (17) gesteuert wird, dem das durch einen Bandpass (6, 22) gefilterte Videosignal zugeführt wird.

8. Schaltungsanordnung nach einem der Ansprüche 1 bis 7 für eine Röntgendiagnostikanlage, dadurch gekennzeichnet, dass eine Steuerschaltung (14) vorhanden ist, die den Schaltzustand der Röntgenröhre erfasst und den Regelkreis nur bei ausgeschalteter Röntgenstrahlung aktiviert.

9. Schaltungsanordnung nach Anspruch 8, dadurch gekennzeichnet, dass der Regler (10) über einen Umschalter (11, 20) mit Speichermitteln (12, 13, 21) verbunden ist, dass eine Vorrichtung (15) zur Erschütterung des Vidikons vorgesehen ist und dass die Steuerschaltung (14) den Umschalter (11, 20) und die Vorrichtung (15) derart steuert, dass nur bei ausgeschalteter Durchleuchtung eine Erschütterung des Vidikons ausgelöst wird und gleichzeitig die entsprechende Ansteuerung des Frequenzfilters durch Änderung der Informationsinhalte der Speichermittel (12, 13, 21) erfolgt.

## Revendications

1. Montage pour supprimer des signaux parasites à basse fréquence contenus dans le signal vidéo d'une caméra de télévision, et comportant un filtre de fréquence (1 à 3, 18) pouvant être branché en supplément, un circuit de détection (6, 7, 16, 17, 22, 23) pour le signal parasite, qui réalise le branchement additionnel du filtre (1 à 3, 18), et un circuit d'enregistrement (6 à 15, 20, 21) pour le signal parasite, caractérisé par le fait que le filtre de fréquence est un filtre de bande que le circuit d'enregistrement agit sur le filtre dans le sens d'une réduction du signal parasite et que le circuit de détection contient un comparateur (16) et un circuit de temporisation (17), qui déclenche un branchement additionnel du filtre de bande (1 à 3) pendant un intervalle de temps programmable uniquement lorsque le signal parasite dépasse une grandeur prédéterminée.

2. Montage suivant la revendication 1, caractérisé par le fait que le circuit d'enregistrement est un circuit de réglage (6 à 15, 20, 21), qui compare le signal parasite présent sur la sortie du montage à une valeur de consigne et agit sur le filtre dans le sens d'une élimination d'écarts de réglage.

3. Montage suivant la revendication 1 ou 2, caractérisé par le fait que le filtre de fréquence est constitué par un filtre coupe-bande (18), dont la fréquence est réglable au moyen du circuit de réglage (6 à 15, 20, 21).

4. Montage suivant la revendication 1 ou 2, caractérisé par le fait que le filtre de fréquence comporte un filtre passe-bande (1), dont le signal de sortie est superposé négativement au signal vidéo dans un étage mélangeur (5).

5. Montage suivant la revendication 4, caractérisé par le fait que le filtre de fréquence comporte en outre un premier étage multiplicateur (2) raccordé au filtre passe-bande (1) et un déphaseur (3) relié à cet étage, l'étage multiplicateur et le déphaseur constituant les organes de réglage pour le circuit de réglage (6 à 15).

6. Montage suivant l'une des revendications 1 à 5, caractérisé par le fait que le circuit de réglage contient un filtre passe-bande (6) pour le signal parasite, qu'à la sortie du filtre passe-bande (6) se trouve raccordé un détecteur de valeurs de crêtes (7), dont le signal de sortie est envoyé à un second étage multiplicateur (8) et à un détecteur (9) du sens de réglage, dont la sortie est reliée à la seconde entrée du second étage multiplicateur (8), que le signal de sortie du second étage multiplicateur (8) est comparé en tant que valeur réelle, dans un régulateur (10) à une valeur de consigne et que la sortie du régulateur (10) est reliée au filtre de fréquence (1 à 3, 18).

7. Montage suivant l'une des revendications 1 à 6, caractérisé par la fait que le filtre de fréquence (1 à 3, 18) peut être branché à l'aide d'un interrupteur (4, 19) qui est commandé par un circuit de temporisation (17) auquel est envoyé le signal vidéo filtré parun filtre passe-bande (6, 22).

8. Montage suivant l'une des revendications 1 à 7 pour une installation de radiodiagnostic, caractérisé par le fait qu'il est prévu un circuit de commande (14) qui détecte l'état de commutation du tube à rayons X et active le circuit de réglage uniquement lorsque le rayonnement X est interrompu.

9. Montage suivant la revendication 8, caractérisé par le fait que le régulateur (10) est relié par l'intermédiaire d'un commutateur (11, 20) à des moyens de mémorisation (12, 13, 21), qu'il est prévu un dispositif (15) servant à mettre en vibration le vidicon et que le circuit de commande (14) commande le commutateur (11, 20) et le dispositif (15) de telle sorte que la mise en vibration du vidicon est déclenchée uniquement lorsque la radioscopie est interrompue, et simultanément la commande correspondante du filtre de fréquence est réalisée par modification des contenus informations des moyens de mémoire (12, 13, 21).

## Claims

1. A circuit arrangement for eliminating any LF interference signals from the video-signal of a television camera, with a connectible frequency filter (1 to 3, 18), an interference signal detector circuit (6, 7, 16, 17, 22, 23) which causes connection of the LF filter (1 to 3, 18) and a pick-up circuit (6 to 15, 20, 21) monitoring for the interference signal, characterised in that the frequency filter is a band filter, that the pick-up circuit acts upon the filter to effect suppression of the interference signal, and that the detector circuit comprises a comparator (16) and a timer (17) which causes the band filter (1 to 3) to be connected for a programmable interval of time only when the interference signal exceeds a predetermined value.

2. A circuit arrangement as claimed in Claim 1, characterised in that the pick-up circuit is a regulating circuit (6 to 15, 20, 21) which compares the interference signal at the output of the circuit arrangement with a theoretical value and acts upon the filter to provide correction of deviations.

3. A circuit arrangement as claimed in Claim 1 or 2, characterised in that the frequency filter consists of a band-stop filter (18) whose frequency can be adjusted by the regulating circuit (6 to 15, 20, 21).

4. A circuit arrangement as claimed in Claim 1 or 2, characterised in that the frequency filter comprises a band-pass filter (1) whose output signal is negatively superimposed upon the video-signal in a mixing stage (5).

5. A circuit arrangement as claimed in Claim 4, characterised in that the frequency filter comprises a first multiplication stage (2) and a phase shift device (3) connected to the band-pass filter (1), forming fine control elements for the regulating circuit (6 to 15).

6. A circuit arrangement as claimed in one of Claims 1 to 5, characterised in that the regulating circuit comprises a band-pass filter (6) for the interference signal, that the output of the band-pass filter (6) is connected to a peak value detector (7) whose output signal is supplied to a second multiplication stage (8) and to a detector (9) for the regulating direction, whose output is connected to the second input of the second multiplication stage (8), that in a regulator (10) the output signal of the second multiplication stage (8) is compared as an actual value with the theoretical value, and that the output of the regulator (10) is connected to the frequency filter (1 to 3, 18).

7. A circuit arrangement as claimed in one of Claim 1 to 6, characterised in that the frequency filter (1 to 3, 18) can be switched on by a switch (4, 19) controlled by a timer (17) supplied with the video-signal filtered by a band-pass filter (6, 22).

8. A circuit arrangement as claimed in one of Claims 1 to 7 for an X-ray diagnostic installation, characterised in that a control circuit (14) is provided which determines the switching state of the X-ray tube and only activates the regulating circuit when X-ray radiation is switched off.

9. A circuit arrangement as claimed in Claim 8, characterised in that the regulator (10) is connected to storage means (12, 13, 21) via a change-over switch (11, 20), that a device (15) is provided for vibrating the vidicon, and that the control circuit (14) controls the change-over switch (11, 20) and the device (15) such that vibration of the vidicon is triggered and the frequency filter simultaneously driven in the appropriate fashion by changing the information contents of the storage means (12, 13, 21) only when the illumination is switched off.

FIG 1

FIG 2

FIG 3